# EUROPEAN PATENT APPLICATION

(11) **EP 2 996 030 A1**
(43) Date of publication of application: **16.03.2016**
(21) Application number: 14184745.9
(22) Date of filing: 15.09.2014
(51) Int. Cl.: G06F 3/14, G09G 5/39

(54) **System and method for interacting screens in a car to perform remote operation**

(71) Applicant: Quanta Storage Inc., Taoyuan County 333 (TW)
(72) Inventor: Lin, Wen-Jing, 333 Taoyuan County (TW); Hung, Hsin-Chih, 333 Taoyuan County (TW); Chiang, Chih-Hung, 333 Taoyuan County (TW); Lou, Jen-Wei, 333 Taoyuan County (TW); Kang, Wen-Chun, 333 Taoyuan County (TW); Liang, Ping, 333 Taoyuan County (TW)
(74) Representative: Straus, Alexander

(57) **Abstract**

A system and method for interacting screens in a car are presented. A memory of a main device is configured to form a main frame buffer for the main device and to form at least one secondary frame buffer for the at least one secondary device. The memory is further configured to form a frequently executed icon frame buffer for a frequently executed icon to store a user interface image when the controller is performing function of the frequently executed icon. A user interface is used to select a touch screen icon and frequently executed icon for the touch screen to be directed to a corresponding frame buffer and immediately display and control images in the corresponding touch screen to improve the interaction between touch screens.

## Description

### Field of the Invention

The present invention discloses a system and method for interacting screens in a car, and more particularly a system and method for interacting screens in a car to perform remote operation and information sharing.

### Background of the Invention

As the automotive industry develops, cars are being equipped with more and more features. Cars may now be equipped with touch screens for the driver and the passengers giving them the freedom to choose from a variety of entertainment, such as music, radio, movie, internet, or games that they prefer. Since passengers may use their own device, the driver may not be affected and therefore increase the safety during driving and decrease the boredom of the passengers while travelling.

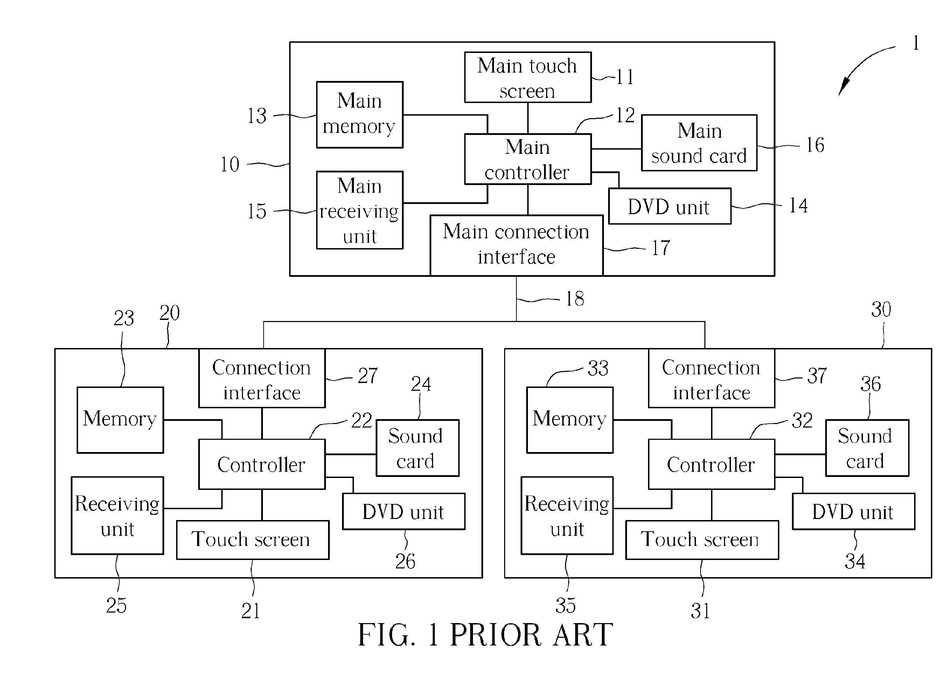

FIG.1 illustrates an entertainment system 1 according to a prior art. A main device 10 is arranged on the dashboard of a car for the driver to use. The back sides of the two front seats each have a secondary device 20 and 30 commonly placed behind the headrest for the passengers to use. After the main device 10 is turned on, the main touch screen 11 of the main device 10 is used to perform a selected operation. The main controller 12 of the main device 10 coordinates with the main memory 13 of the main device 10 to process an application (APP) program file, receive a movie from a main digital video disc (DVD) unit 14 or have a main receiving unit 15 receive an internet signal, a television signal, or a radio signal to display an image on the main touch screen 11 and output sound from a main sound card 16. The main sound card 16 may be able to connect to the sound system of the car. The video signal of the main device 10 may be wired or wirelessly transmitted to other equipment through a main connection interface 17.

The secondary devices 20 and 30 at the back seat, similar to the main device 10, comprise touch screens 21 and 31, controllers 22 and 32, memories 23 and 33, DVD units 24 and 34, receiving units 25 and 35, sound cards 26 and 36, and connection interfaces 27 and 37. The secondary devices 20 and 30 and the main device 10 each have an independently operating controller. Although the devices can play a movie or process files without disturbing one another, such system would have a high production cost.

Furthermore, when the secondary devices 20 and 30 and the main device 10 need to interact with each other, there is a need to use the main connection interface 17, and connection interfaces 27 and 37 or a wireless connection such as Bluetooth® to establish an intranet connection between the devices within the car. The movie or the information to be shared is transformed to a transmission file and a wired or wireless connection is used to share to a designated recipient device. After the designated recipient device has received the transmission file, the transmission file needs to go through numerous operations for the recipient device to be able to view the shared movie or information. The numerous operations to be performed will divide the attention of the driver from driving and thus affect the safety of driving.

When there is a problem with operating one of the devices, i.e. the driver is not able to divide the attention to set the navigation system or children in the backseat are crying because they are not able to view cartoons, the passenger or the driver would have difficulty in accessing another device because the small space in the car makes it hard to move around. The passenger and driver are also not able to use the touch screens to perform interaction.

In another prior art (US 6243645), the internet signal, the television signal, and the radio signal streamed are simultaneously received by the devices and the devices may interchange between the streamed signals to immediately display a same video on the main device and the secondary devices. Although the main device and the secondary devices may view the same image, the main device and the secondary devices are not able to operate independently and are also not able to use the touch screens to interact with other devices. Therefore, there is a need to develop a way for interacting screens in a car.

### Summary of the Invention

The present invention aims at providing a system and method for interacting screens in a car having a memory of a main device configured to have frame buffers for the main device and at least one secondary device. A user interface is used to choose a touch screen to interact with and direct to a corresponding frame buffer of the touch screen to simultaneously display and control an image. Thereby, improve the interaction of each touch screen.

The present invention also aims at providing a system for interacting screens in a car that uses a controller of a main device in coordination with a memory to execute function selected in the user interface of each touch screen and transmit function frames. Thereby, components of the secondary device are simplified to decrease cost of production.

The present invention further aims at providing a system and method for interacting screens in a car that uses a memory of a main device to configure frame buffers corresponding to a plurality of icons to provide each touch screen with a variety of selections and direct the touch screen to a corresponding frame buffer to display a corresponding image. Thereby, the interaction operation is simplified.

This is achieved by a system and method for interacting screens in a car according to the claims here below. The dependent claims pertain to corresponding further developments and improvements.

As will be seen more clearly from the detailed description following below, a main device of the system configures a main switch to turn on or turn off a power supply of the main device. A main touch screen of the main device is configured to display a user interface having a plurality of icons to select from. A controller of the main device in coordination with a memory of the main device is configured to generate a user interface image corresponding to the icon selected to display on the main touch screen and output sound using a sound card of the main device. Furthermore, a main connection interface configured to input/output video signals through a wired or a wireless connection. At least one secondary device configures a secondary connection interface to use a connection to connect to the main connection interface. The at least one secondary device has a secondary switch configured to turn on or turn off a power supply of the secondary device. The user interface is transferred to a secondary touch screen of the secondary device where another icon is selected when the controller of the main device detects the power supply of the secondary device is turned on. The controller of the main device in coordination with the memory is configured to generate a user interface image corresponding to the other icon selected to display on the secondary touch screen and output sound using a sound card of the main device. The memory of the main device is configured to form a main frame buffer for the main device to store a user interface image on the main touch screen when the controller is performing function of the icon selected and at least one secondary frame buffer for the at least one secondary device. Each of the at least one secondary frame buffer is configured to store a user interface image on the secondary touch screen when the controller is performing function of the other icon.

The system uses the user interface image in the main frame buffer as default image to be displayed on the main touch screen. The user interface comprises a secondary touch screen icon and a main touch screen icon. The controller maintains the user interface image in the main frame buffer and directs the main touch screen to the secondary frame buffer for the main touch screen to receive the user interface image in the secondary frame buffer having the main touch screen and the secondary touch screen simultaneously display a same image to initiate interaction between the main touch screen and the secondary touch screen When the secondary touch screen icon is selected on the main touch screen. After the interaction, the main touch screen icon is selected on the main touch screen. The controller maintains the user interface image in the secondary frame buffer and directs the main touch screen to the main frame buffer for the main touch screen to receive the user interface image in the main frame buffer and display the user interface image in the main frame buffer.

The system uses the user interface image in the secondary frame buffer as default image to be displayed on the secondary touch screen. The controller maintains the user interface image in the secondary frame buffer and directs the secondary touch screen to the main frame buffer for the secondary touch screen to receive the user interface image in the main frame buffer having the main touch screen and the secondary touch screen simultaneously display a same image to initiate interaction between the main touch screen and the secondary touch screen when the main touch screen icon is selected on the secondary touch screen. The secondary touch screen icon is selected on the secondary touch screen after the interaction. The controller maintains the user interface image in the main frame buffer and directs the secondary touch screen to the secondary frame buffer for the secondary touch screen to receive the user interface image in the secondary frame buffer and display the user interface image in the secondary frame buffer.

The memory of the main device is further configured to form a frequently executed icon frame buffer for a frequently executed icon such as navigation icon to store a user interface image when the controller is performing function of the frequently executed icon. The controller in coordination with the memory is configured to perform a function for the frequently executed icon selected and update the user interface image stored in the frequently executed icon frame buffer at the same time when the frequently executed icon is selected. The device is directed to the frequently executed icon frame buffer having the main touch screen/the secondary touch screen directly receive the user interface image in the frequently executed icon frame buffer and immediately display the user interface image in the frequently executed icon frame buffer when the frequently executed icon is selected in the main touch screen/the secondary touch screen. The controller continues to execute the function for the frequently executed icon in a background and continues to update the user interface image in the frequently executed icon frame buffer until the main device is turned off when the main touch screen/the secondary touch screen exits the frequently executed icon frame buffer.

As will be seen more clearly from the detailed description following below, the method of operating a system for interacting screens in a car comprises turning on a power supply of a touch screen, displaying a user interface image stored in a corresponding frame buffer of a memory on the touch screen, transmitting the user interface image to the touch screen to provide a plurality of icons for selecting, directing the touch screen to a frame buffer of the memory corresponding to a touch screen icon when the touch screen icon of the plurality of icons is selected, the touch screen directly receiving a user interface image in the frame buffer for the touch screen icon, and operating and controlling the user interface image displayed on the touch screen.

The plurality of icons of the user interface of the method comprise the touch screen icon and a frequently executed icon. The touch screen is directed to a frequently executed icon frame buffer for the frequently executed icon selected having the touch screen directly receive a user interface image in the frequently executed icon frame buffer and operate and control the user interface image displayed on the touch screen when the frequently executed icon is selected. A function corresponding to the icon selected is performed and the user interface image in the corresponding frame buffer is updated having the touch screen receive the user interface image in the corresponding frame buffer and operate and control the image displayed on the touch screen when the icon selected is not the frequently executed icon or the touch screen icon.

### Brief Description of the Drawings

In the following, the invention is further illustrated by way of example, taking reference to the accompanying drawings. Thereof
FIG.1 is a block diagram of an entertainment system according to a prior art,
FIG.2 is a block diagram of a system for interacting screens in a car according to a first embodiment of the present invention,
FIG. 3 is a diagram of a structure of a memory of the system in FIG.2,
FIG.4 is an illustration of a user interface of the system in FIG.2,
FIG.5 is an example of an image for monitoring conditions of the car parameter,
FIG.6 is an example of an image of a video played using a digital video disc (DVD) unit,
FIG.7 is a flowchart of a method of operating the system for interacting screens in the car according to a first embodiment of the present invention,
FIG.8 is a diagram of a structure of a memory of the system for interacting screens in the car according to a second embodiment of the present invention,
FIG.9 is an example of a navigation image, and
FIG.10 is a flowchart of a method of operating the system for interacting screens in the car according to a second embodiment of the present invention.

### Detailed Description

To provide a better understanding of the invention being disclosed, representative embodiments will be detailed as follows. The representative embodiments of the disclosure are illustrated in the accompanying drawings with numbered elements to elaborate the contents and effects to be achieved.

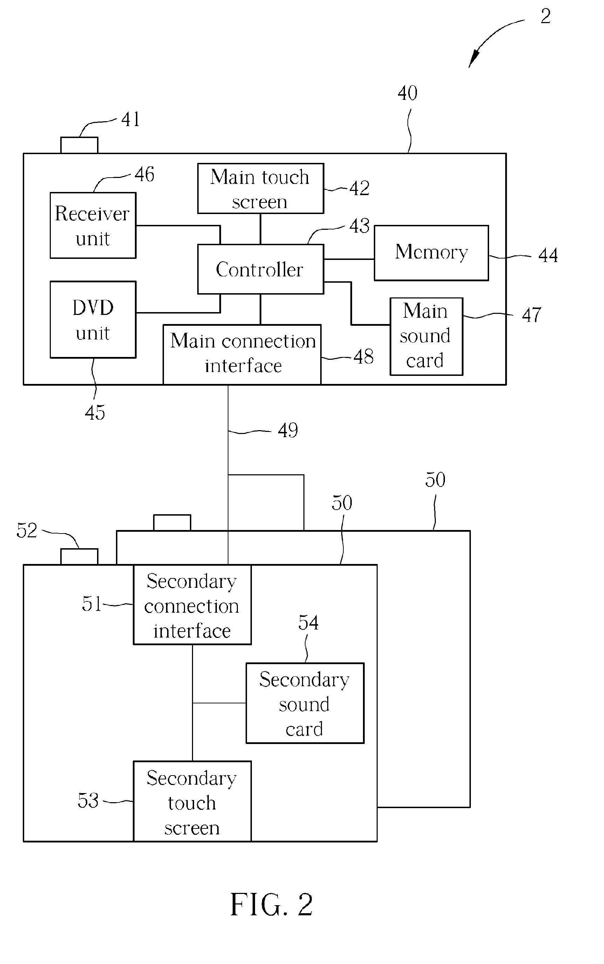

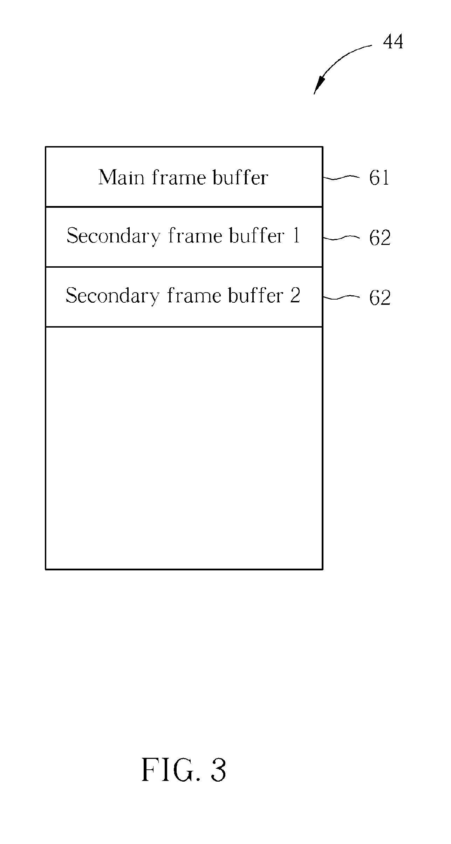

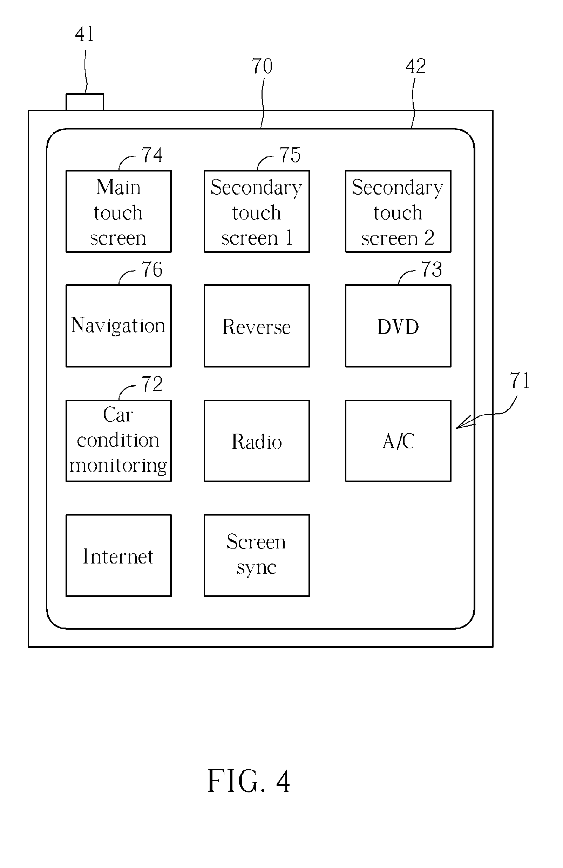

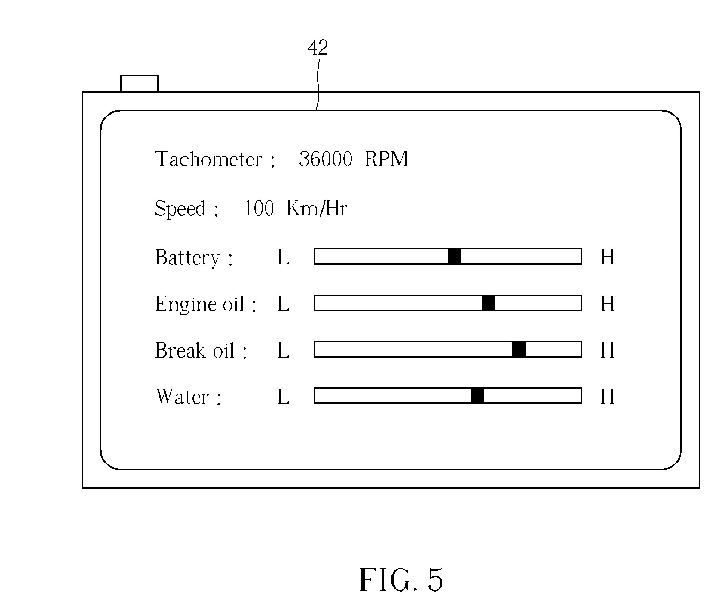

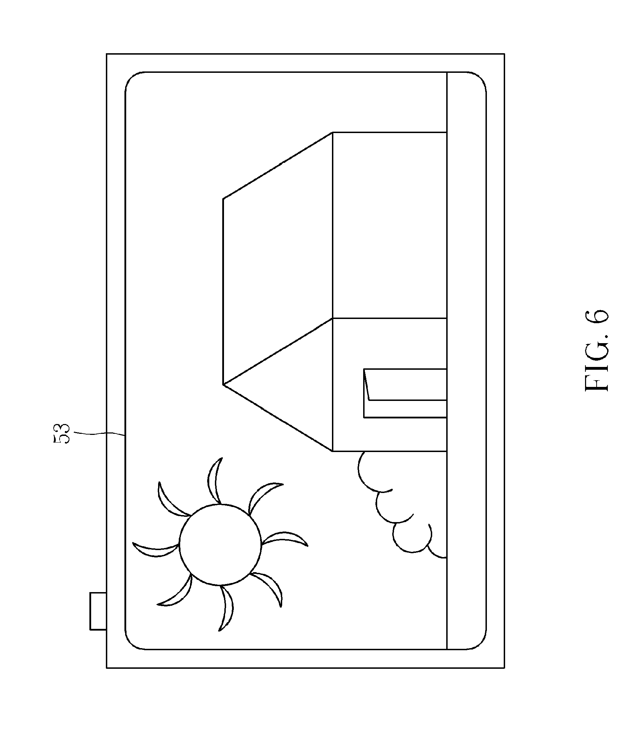

FIG.2 illustrates a block diagram of a system for interacting screens in a car 2 according to a first embodiment of the present invention. FIG.3 illustrates a structure of a memory of the system in FIG.2. FIG.4 illustrates a user interface of the system in FIG.2. FIG.5 illustrates an example of an image for monitoring conditions of the car parameter. FIG.6 illustrates an example of an image of a video played using a digital video disc (DVD) unit. The system for interacting screens in the car 2 comprises a main device 40 and at least one secondary device 50. The main device 40 may be arranged on a dashboard in front of the driver for the driver to use. The at least one secondary device 50 may be arranged near a passenger seat, i.e. on a dashboard in front of a front passenger seat or at the back of the headrest of the front seats of a car for a passenger to use, allowing the car 2 to have an interacting system for the main device 40 and at least one secondary device 50.

The main device 40 may be used as a main host of the car. The main device 40 comprises a main switch 41, a main touch screen 42, a controller 43, a memory 44, a DVD unit45, a receiver unit 46, a main sound card 47 and a main connection interface 48. The main switch 41 may be configured to turn on or turn off a power supply of the main device 40. The controller 43 may be configured to detect if the power supply of the main device 40 is turned on. When the power supply of the main device 40 is turned on, a main touch screen 42 of the main device 40 may be configured to display a user interface 70 as shown in FIG.4. The user interface 70 may include a plurality of icons 71 for the driver to select from. According to the icon 71 selected, the controller 43 in coordination with the memory 44 may be configured to perform a function corresponding to the icon 71 selected. For example, executing an application (APP) program stored in the memory 44, receiving video signals from the DVD unit 45, or have the receiving unit 46 receive an internet signal, a television signal, and a radio signal and generate an image to display on the main touch screen 42 and output sound using a main sound card 47. The main sound card 47 may be able to connect to a sound system of the car. Furthermore, the main device 40 may use the main connection interface 48 to input/output video signals wired or wirelessly to other devices using a connection 49.

The secondary device 50 may comprise a secondary connection interface 51, a secondary switch 52, a secondary touch screen 53, and a secondary sound card 54. The secondary connection interface 51 may use the connection 49 to connect to the main connection interface 48 of the main device 40. The secondary switch 52 may be configured to turn on or turn off a power supply of the secondary device 50. When the secondary switch 52 turns on the power supply of the secondary device 50, the controller 43 of the main device 40 may be configured to detect if the power supply of the secondary device 50 is turned on using the connection 49. The user interface 70 may then be transmitted to the secondary device 50 through the secondary connection interface 51 to allow the passenger to select from the plurality of icons 71. And according to the icon 71 selected, the controller 43 of the main device 40 in coordination with the memory 44 may be configured to perform a function of the icon 71 selected in the secondary touch screen 53. The generated image corresponding to the selected icon 71 in the secondary touch screen 53 may be displayed on the secondary touch screen 53 and a secondary sound card 54 may be used to output sound for use of the passenger. Aside from the secondary connection interface 51, the secondary switch 52, the secondary touch screen 53, and the secondary sound card 54, the secondary device 50, the secondary device 50 may also access the controller 43, the memory 44, the DVD unit 45 and the receiving unit 46 of the main device 40. Therefore, the components of the secondary device 50 may be simplified to decrease the cost of the system for interacting screens in the car 2.

To allow the main device 40 and the secondary device 50 to access shared components quickly and smoothly, the memory 44 of the main device 40 may be configured as shown in FIG.3. The memory 44 may be configured to have a plurality of frame buffers, each corresponding to one of the main device 40 and the at least one secondary device 50. A main frame buffer 61 of the plurality of frame buffers corresponds to the main device 40 and is configured to store a user interface image on the main touch screen 42 when the controller 43 is performing function of the icon 71 selected on the main device 40. And a secondary frame buffer 62 of the plurality of frame buffers corresponds a secondary device 50 and is configured to store a user interface image on the secondary touch screen 53 when the controller 43 is performing function of the icon 71 selected on the secondary device 50.

During the operation of the system for interacting screens in the car 2, the main switch 41 may be used to turn on the power supply of the main device 40. The controller 43 may be used to detect if the power supply of the main device is turned on and have the main touch screen 42 display the user interface image in the main frame buffer 61 as a default. The user interface 70 shown in FIG.3 may be transmitted to the main touch screen 42 to allow the driver to select from the plurality of icons 71. And according to the icon 71 selected by the driver, i.e. a car condition monitoring icon 72, the controller 43 in coordination with the memory 44 may execute the function of the car condition monitoring icon 72 to generate an image showing the car parameters being monitored. The user interface image in the main frame buffer 61 may be updated to be the image showing the car parameters being monitored as shown in FIG.5 provided to the driver for reference.

The passenger may use the secondary switch 52 to turn on the power supply of the secondary device 50. The controller 43 of the main device 40 may be used to detect if the power supply of the secondary device 50 is turned on. The user interface image in the secondary frame buffer 62 is displayed as default on the secondary touch screen 53 when the secondary touch screen is turned on. The user interface 70 shown in FIG.3 may be transmitted to the secondary touch screen 53 to allow the passenger to select from the plurality of icons 71. And according to the icon 71 selected by the passenger, i.e. selecting DVD unit icon 73, the controller 43 in coordination with the memory 44 may use the DVD unit 45 of the main device 40 to play the selected disc and generate a video to be displayed. The user interface image in the secondary frame buffer 62 may be updated. The user interface image in the secondary frame buffer 62 may be transmitted to the secondary touch screen 53 through the connection 49 to display the video from the DVD unit 45 as shown in FIG.6 and allow the passenger to watch the video without disturbing the driver. Therefore, the present invention allows the driver and the passenger to independently operate the environment without having to disturb each other.

When the driver needs to discuss, for example, the car condition with the passenger, the passenger may access the user interface 70 and select a main touch screen icon 74. The controller 43 may maintain the user interface image in the secondary frame buffer 62. At the same time, the secondary touch screen 53 is directed to the main frame buffer 61. The secondary touch screen 53 may receive the image showing the car parameters being monitored from the main frame buffer 61. The secondary touch screen 53 and the main touch screen 42 may simultaneously display the image showing the car parameters being monitored as shown in FIG.5 having the passenger and the driver able to view the same image and discuss the car condition. After finishing the discussion, the passenger may select from a setting of the secondary touch screen 53 to retrieve user interface 70 and, from the user interface 70, select the secondary touch screen icon 75. The controller 43 may direct the secondary device 50 to the secondary frame buffer 62 for the secondary touch screen 53 to receive the user interface image in the secondary frame buffer 62 and to continue displaying video from the DVD unit 45 as shown in FIG.6. The main touch screen 42 continues to receive the user interface image in the main frame buffer 61 to display the image showing the car parameters being monitored as shown in FIG.5 so as not to disturb the driver from referencing the image. Similarly, the passenger may select a secondary touch screen icon of another passenger to perform interaction. Therefore, the present invention allows interaction of the main device 40 of the driver and the secondary device 50 of the passenger or interaction between the secondary devices 50 of the plurality of passengers to achieve interacting of screens in the car.

Similarly, when a passenger needs to interact with the driver, i.e. children sitting in the back are crying because they are not able to watch cartoons, the driver may access the user interface 70 and select a secondary touch screen icon 75. The controller 43 maintains the user interface image in the main frame buffer 61 and directs the main touch screen 42 to the secondary frame buffer 62 for the main touch screen 42 and the secondary touch screen 53 to receive the user interface image in the secondary frame buffer 62. The main touch screen 42 and the secondary touch screen 53 may simultaneously display video from the DVD unit 45 as shown in FIG.6. The main touch screen 42 may be used to operate and control the DVD unit 45 to play the cartoon. Afterwards, the main device 40 may retrieve user interface 70 and select the main touch screen icon 73 to have the main touch screen 42 return to displaying the user interface image in the main frame buffer 61, which may be the image showing the car parameters being monitored. And the secondary touch screen 53 may continue displaying the cartoon. Therefore, the present invention allows the driver and the passengers to perform remote operation and achieve an improved interaction.

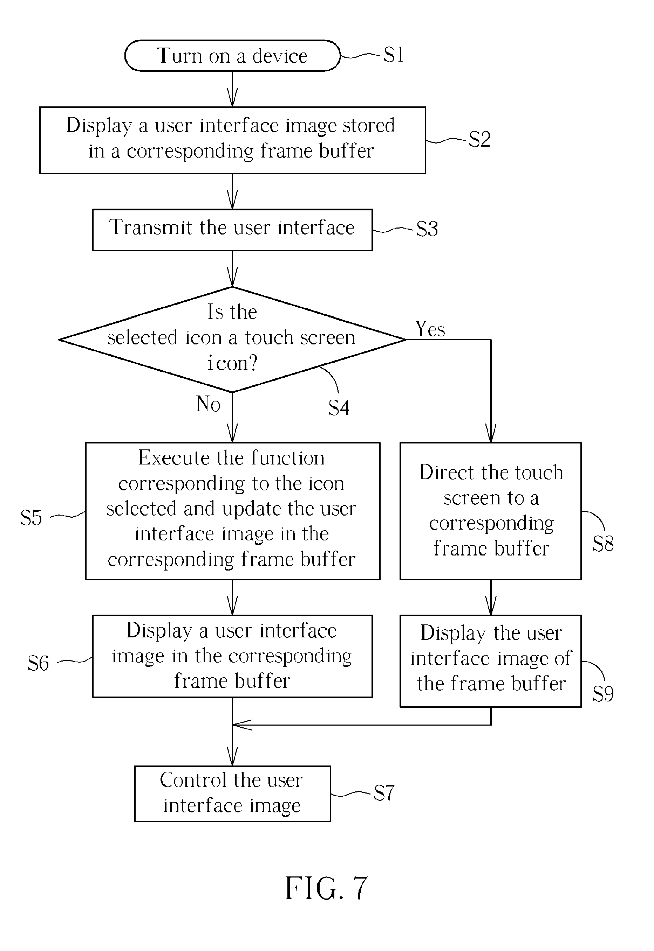

FIG.7 illustrates a flowchart of a method of operating the system for interacting screens in the car according to a first embodiment of the present invention. The method of operating the system for interacting screens in the car may include but is not limited to the following steps:
Step S1: turn on a power supply of a device to turn on a touch screen;
Step S2: display a user interface image stored in a corresponding frame buffer of a memory on the touch screen;
Step S3: transmit the user interface image to the touch screen to provide a plurality of icons for selecting;
Step S4: determine if the selected icon is a touch screen icon; if the selected icon is not a touch screen icon, perform step S5; if that the selected icon is a touch screen icon, perform step S8;
Step S5: execute the function corresponding to the icon selected and update the user interface image in the corresponding frame buffer;
Step S6: display a user interface image in the corresponding frame buffer to the touch screen;
Step S7: operate and control the user interface image displayed on the touch screen;
Step S8: maintain the user interface image in the frame buffer and direct the touch screen to a frame buffer of the memory corresponding to a touch screen icon;
Step S9: display the user interface image in the frame buffer on the touch screen and return to step S7.

Therefore, according to the first embodiment of the method disclosed, the present invention may configure frame buffers to correspond to the touch screens in the memory. The user interface is used to select which of the touch screens to interact with. The touch screen is directed to the frame buffer of the memory corresponding to the touch screen icon selected. At the same time, the user interface image in the frame buffer is simultaneously displayed, operated, and controlled to improve the interaction between touch screens.

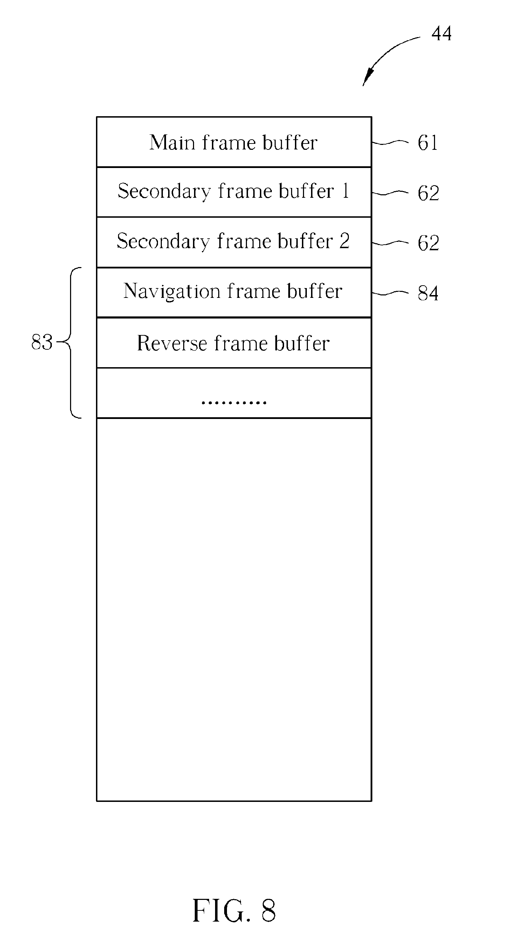

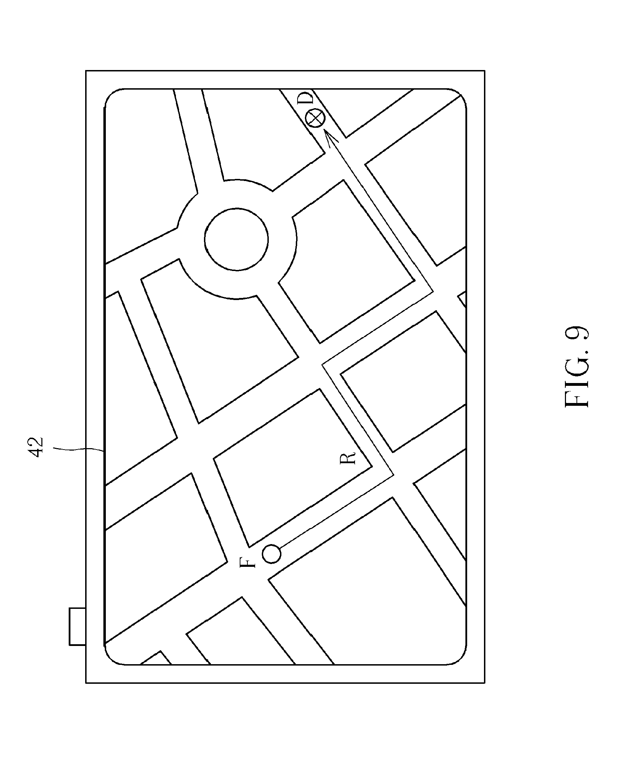

FIG.8 illustrates a structure of the memory 44 of the system for interacting screens in the car 2 according to a second embodiment of the present invention. FIG.9 illustrates an example of a navigation image. The main difference between the first and second embodiment is shown in the structure of the memory 44. To simplify the description, same components between the two embodiments may use the same labels. Aside from the main frame buffer 61 and the secondary frame buffers 62 configured in the memory 44 as shown in the first embodiment, the second embodiment further may further be configured to form a frequently executed icon frame buffer 83 to store a user interface image when the controller 43 is performing function of a frequently executed icon to increase the speed of displaying the image corresponding to the frequently executed icon selected on the user interface 70 and decrease the time the driver need to focus on the display thereby, thereby increasing the driving safety. Some embodiments of the present invention may be limited by the size of the memory 44 and only some of the frequently executed icon frame buffer 83 may be set. But as can be seen in the description of the present invention, when there is enough space in the memory 44, a plurality of frequently executed icon frame buffers 83 may be set in the user interface 70 to increase the speed of the operation and control of the image in the touch screen.

When the main device is turned on, the user interface image in the main frame buffer 61 may be displayed as default on the main touch screen 42. A frequently executed icon corresponding to the frequently executed icon frame buffer displayed on the user interface 70 may be selected by the driver. For example, the frequently executed icon selected may be a navigation icon 76. The controller 43 in coordination with the memory 44 may perform a function of the navigation icon 76 and generate a navigation image. At the same time, the user interface image stored in the navigation frame buffer 84 is updated. The navigation frame buffer 84 may be one of the frequently executed icon frame buffers. The main touch screen 42 is directed to the navigation frame buffer 84 to receive the user interface image in the navigation frame buffer 84 and have the main touch screen 42 displaying the navigation image as shown in FIG.9 to help the driver navigate.

When the driver is not able to operate the main touch screen 42 and needs the passenger to help set the starting point F to end point D of the navigation, the passenger may select the navigation icon 76 from the user interface 70 from the secondary touch screen 53. The controller 43 maintains the user interface image in the secondary frame buffer 62 and directs the second touch screen 53 to the navigation frame buffer 84. Because the navigation frame buffer 84 already has a user interface image established by the main device 40, the function of the navigation icon 76 need not be re-executed. The secondary touch screen 53 may directly receive the user interface image in the navigation frame buffer 84 to immediately display the same navigation image as displayed in the main touch screen 42 and set the route R using the navigation image displayed on the secondary touch screen 53. After finishing setting of the route R, the passenger may select the secondary touch screen icon 75 from the user interface 70 displayed on the secondary touch screen 53. The controller 43 directs the secondary touch screen 53 back to the secondary frame buffer 62 and the secondary touch screen 53 returns to displaying the user interface image maintained in the secondary frame buffer 62. The main touch screen 42 of the driver is left to continue receiving the user interface image in the navigation frame buffer 84 to continue receiving navigation image as a reference during the drive.

If the driver does not need to refer to the navigation image, the main touch screen icon 73 may be selected from the user interface 70 displayed in the main touch screen 42 to receive the user interface image in the main frame buffer 61. The controller 43 may continue performing the function of the navigation icon in the background to continue updating the user interface image in the navigation frame buffer 84 to allow the main touch screen 42 or the secondary touch screen 53 to immediately return to the navigation image upon request until the main device is turned off and, in effect, turning off the operation of the navigation frame buffer 84. Therefore, the present invention may use the user interface image of the frequently executed icon frame buffer 83 that is continuously operating to allow main device 40 of the driver and the secondary device 50 of the plurality of passengers to achieve quick synchronization and operate with the same image in order to improve interaction.

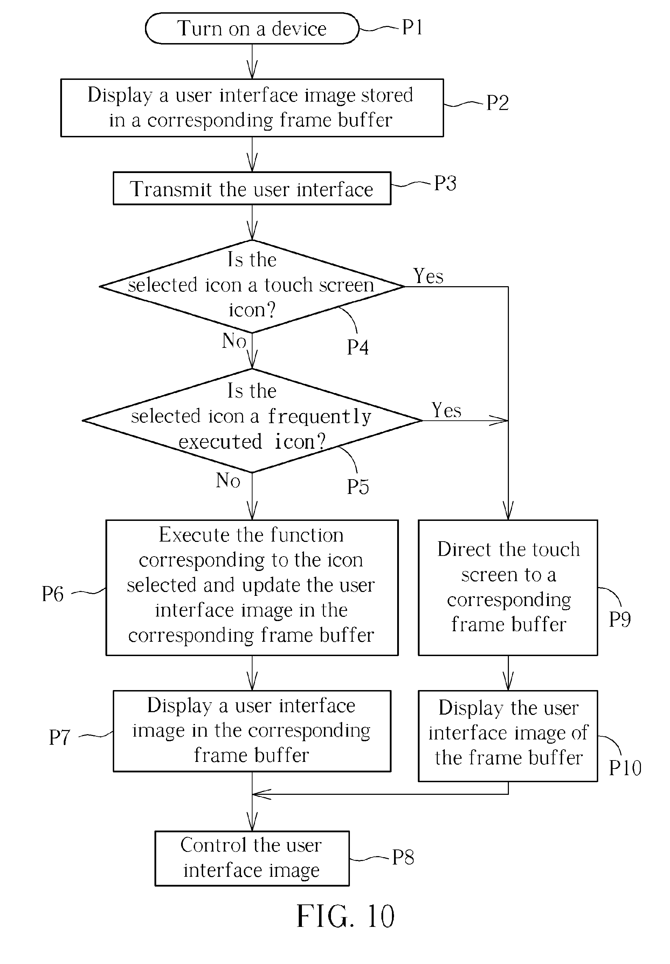

FIG.10 illustrates a flowchart of a method of operating the system for interacting screens in the car according to a second embodiment of the present invention. The method of operating the system for interacting screens in the car may include but is not limited to the following steps:
Step P1: turn on a power supply of a device to turn on a touch screen;
Step P2: display a user interface image stored in a corresponding frame buffer of a memory on the touch screen;
Step P3: transmit the user interface image to the touch screen to provide a plurality of icons for selecting;
Step P4: determine if the selected icon is a touch screen icon; if the selected icon is not a touch screen icon, perform step P5; if the selected icon is a touch screen icon, perform step P9;
Step P5: determine if the selected icon is a frequently executed icon; if the selected icon is not a frequently executed icon, perform step P6; if the selected icon is a frequently executed icon, perform step P9;
Step P6: execute the function corresponding to the icon selected and update the user interface image in the corresponding frame buffer;
Step P7: display a user interface image in the corresponding frame buffer to the touch screen;
Step P8: operate and control the user interface image displayed on the touch screen;
Step P9: maintain the user interface image in the frame buffer and direct the touch screen to a frame buffer of the memory corresponding to a touch screen icon or the frequently executed icon;
Step P10: the touch screen directly receives a user interface image in the frame buffer for the touch screen icon or the frequently executed icon and return to step P8.

The second embodiment of the present invention shows that the memory of the main device may not only be used to configure a main frame buffer or a secondary buffer but also be used to configure a frequently executed icon frame buffer. Not only giving each of the touch screens a variety of selection but also allowing the touch screens to be immediately directed to the frequently executed icon frame buffer to receive user interface image from the frequently executed icon frame buffer to be displayed on the touch screens. In doing so, the interaction operation among the touch screens is simplified.

## Claims

1. A system for interacting screens in a car (2) **characterized by**:
a main device (40) for a driver to use comprising:
a main switch (41) configured to turn on or turn off a power supply of the main device (40);
a main touch screen (42) configured to display a user interface (70) having a plurality of icons (71) when the power supply of the main device (40) is turned on;
a controller (43) configured to perform a function of an icon (71) selected in coordination with a memory (44) of the main device (40) by displaying an image on the main touch screen (42) and outputting sound using a main sound card (47) of the main device (40); and
a main connection interface (48) configured to input/output video signals through a wired or wireless connection (49); and
at least one secondary device (50) for a passenger to use each comprising:
a secondary connection interface (51) configured to connect to the main connection interface (48) of the main device (40) through the wired or wireless connection (49); and
a secondary switch (52) configured to turn on or turn off a power supply of the secondary device (50);
a secondary touch screen (53) where the user interface (70) having the plurality of icons (71) is displayed when the controller (43) of the main device (40) detects the power supply of the secondary device (50) is turned on;
a secondary sound card (54) configured to output sound and the secondary touch screen (53) configured to display another image when the controller (43) of the main device (40) in coordination with the memory (44) of the main device (40) is performing a function corresponding to another icon (71) selected on the secondary touch screen (53) ;
wherein the memory (44) of the main device (40) is configured to form a main frame buffer (61) for the main device (40) to store a user interface image on the main touch screen (42) when the controller (43) is performing the function of the icon (71) selected and at least one secondary frame buffer for the at least one secondary device (50), each of the at least one secondary frame buffer (62) configured to store a user interface image on the secondary touch screen (53) when the controller (43) is performing the function of the other icon (71).

2. The system (2) of claim 1, further **characterized in that** the user interface image in the main frame buffer (61) is displayed as default on the main touch screen (42) when the main touch screen (42) is turned on, and the user interface image in the secondary frame buffer (62) is displayed as default on the secondary touch screen (53) when the secondary touch screen (53) is turned on.

3. The system (2) of any of claims 1 to 2, further **characterized in that** the controller (43) maintains the user interface image in the main frame buffer (61) and directs the main touch screen (42) to the secondary frame buffer (62) for the main touch screen (42) to receive the user interface image in the secondary frame buffer (62) having the main touch screen (42) and the secondary touch screen (53) simultaneously display a same image to initiate interaction between the main touch screen (42) and the secondary touch screen (53) when a secondary touch screen icon (75) of the user interface (70) is selected on the main touch screen (42).

4. The system (2) of claim 3, further **characterized in that** the controller (43) maintains the user interface image in the secondary frame buffer (62) and directs the main touch screen (42) to the main frame buffer (61) for the main touch screen (42) to receive the user interface image in the main frame buffer (61) and display the user interface image in the main frame buffer (61) after the interaction when a main touch screen icon (74) of the user interface (70) is selected on the main touch screen (42).

5. The system (2) of claim 4, further **characterized in that** the controller (43) maintains the user interface image in the secondary frame buffer (62) and directs the secondary touch screen (53) to the main frame buffer (61) for the secondary touch screen (53) to receive the user interface image in the main frame buffer (61) having the main touch screen (42) and the secondary touch screen (53) simultaneously display a same image to initiate interaction between the main touch screen (42) and the secondary touch screen (53) when the main touch screen icon (74) of the user interface (70) is selected on the secondary touch screen (53).

6. The system (2) of claim 5, further **characterized in that** the controller (43) maintains the user interface image in the main frame buffer (61) and directs the secondary touch screen (53) to the secondary frame buffer (62) for the secondary touch screen (53) to receive the user interface image in the secondary frame buffer (62) and display the user interface image in the secondary frame buffer (62) when the secondary touch screen icon (75) is selected on the secondary touch screen (75) after the interaction.

7. The system (2) of any of claims 1 to 6, further **characterized in that** the memory (44) of the main device (40) is further configured to form a frequently executed icon frame buffer (83) for storing a user interface image when the controller (43) is performing a function of a frequently executed icon (76).

8. The system (2) of claim 7, further **characterized in that** the controller (43) in coordination with the memory (44) is configured to perform a function corresponding to the frequently executed icon (76) selected and update the user interface image stored in the frequently executed icon frame buffer (83) at a same time when the frequently executed icon (76) is selected.

9. The system (2) of claim 8, further **characterized in that** selecting the frequently executed icon in the main touch screen (42)/the secondary touch screen (53) directs the main touch screen (42)/the secondary touch screen (53) to the frequently executed icon frame buffer (83) having the main touch screen (42)/the secondary touch screen (53) directly receive the user interface image in the frequently executed icon frame buffer (83) and immediately display the user interface image in the frequently executed icon frame buffer (83).

10. The system (2) of claim 9, further **characterized in that**, the controller (43) continues to execute the function corresponding to the frequently executed icon (76) in a background and continues to update the user interface image in the frequently executed icon frame buffer (83) until the main device (40) is turned off when the main touch screen (42)/the secondary touch screen (53) exits the frequently executed icon frame buffer (83).

11. The system (2) of any of claims 1 to 10, further **characterized in that** the main device (40) further comprises a digital video disc (DVD) unit (45) configured to play video signals and a receiver unit (46) configured to receive an internet signal, a television signal, and a radio signal.

12. A method of operating a system for interacting screens in a car (2) **characterized by**:
turning on a power supply of a device (40, 50) to turn on a touch screen (42, 53);
displaying a user interface image stored in a corresponding frame buffer (61, 62, 83) of a memory (44) on the touch screen (42, 53);
transmitting the user interface (70) to the touch screen (42, 53) to provide a plurality of icons (71) for selection;
directing the touch screen (42, 53) to a frame buffer (61, 62, 83) of the memory (44) corresponding to a touch screen icon (74, 75) when the touch screen icon (74, 75) of the plurality of icons (71) is selected;
the touch screen (42, 53) directly receiving a user interface image in the frame buffer (61, 62, 83) corresponding to the touch screen icon (74, 75); and
operating and controlling the user interface image displayed on the touch screen (42, 53).

13. The method of claim 12, further **characterized by** maintaining the user interface image in the corresponding frame buffer (61, 62, 83) before directing the touch screen (42, 53) to the frame buffer (61, 62, 83) corresponding to the touch screen icon (74, 75) selected.

14. The method of any of claims 12 to 13, further **characterized in that** directing the touch screen (42, 53) to a frequently executed icon frame buffer (83) corresponding to the frequently executed icon (76) selected by having the touch screen (42, 53) directly receive a user interface image in the frequently executed icon frame buffer (83) and operating and controlling the user interface image displayed on the touch screen (42, 53) when a frequently executed icon (76) of the plurality of icons (71) is selected.

15. The method of claim 14, further **characterized in that** performing a function corresponding to the icon (71) selected by having the touch screen (42, 53) receive the user interface image in the corresponding frame buffer (61, 62, 83), and operating and controlling the image displayed on the touch screen (42, 53) when the icon (71) selected is not the frequently executed icon (76) or the touch screen icon (74, 75).

## Amended claims

### Amended claims in accordance with Rule 137(2) EPC.

1. A system for interacting screens in a car (2) **characterized by**:
a main device (40) for a driver to use comprising:
a main switch (41) configured to turn on or turn off a power supply of the main device (40);
a main touch screen (42) configured to display a user interface (70) having a plurality of icons (71) when the power supply of the main device (40) is turned on;
a controller (43) configured to perform a function of an icon (71) selected in coordination with a memory (44) of the main device (40) by displaying an image on the main touch screen (42) and outputting sound using a main sound card (47) of the main device (40); and
a main connection interface (48) configured to input/output video signals through a wired or wireless connection (49); and
at least one secondary device (50) for a passenger to use each comprising:
a secondary connection interface (51) configured to connect to the main connection interface (48) of the main device (40) through the wired or wireless connection (49); and
a secondary switch (52) configured to turn on or turn off a power supply of the secondary device (50);
a secondary touch screen (53) configured to display the user interface (70) having the plurality of icons (71) when the controller (43) of the main device (40) detects the power supply of the secondary device (50) is turned on and display another image when the controller (43) of the main device (40) in coordination with the memory (44) of the main device (40) is performing a function corresponding to another icon (71) selected on the secondary touch screen (53);
a secondary sound card (54) configured to output sound;
wherein the memory (44) of the main device (40) is configured to form a plurality of frame buffers, the plurality of frame buffers comprising a main frame buffer (61) for the main device (40) to store a user interface image displayed on the main touch screen (42) when the controller (43) is performing the function of the icon (71) in the main device (40) and at least one secondary frame buffer for the at least one secondary device (50), each of the at least one secondary frame buffer (62) configured to store a user interface image displayed on the secondary touch screen (53) when the controller (43) is performing the function of the other icon (71) in the at least one secondary device (50).

2. The system (2) of claim 1, further **characterized in that** the user interface image in the main frame buffer (61) is displayed as default on the main touch screen (42) when the main touch screen (42) is turned on, and the user interface image in the secondary frame buffer (62) is displayed as default on the secondary touch screen (53) when the secondary touch screen (53) is turned on.

3. The system (2) of any of claims 1 to 2, further **characterized in that** the controller (43) maintains the user interface image in the main frame buffer (61) and directs the main touch screen (42) to the secondary frame buffer (62) for the main touch screen (42) to receive the user interface image in the secondary frame buffer (62) having the main touch screen (42) and the secondary touch screen (53) simultaneously display a same image to initiate interaction between the main touch screen (42) and the secondary touch screen (53) when a secondary touch screen icon (75) of the user interface (70) is selected on the main touch screen (42).

4. The system (2) of claim 3, further **characterized in that** the controller (43) maintains the user interface image in the secondary frame buffer (62) and directs the main touch screen (42) to the main frame buffer (61) for the main touch screen (42) to receive the user interface image in the main frame buffer (61) and display the user interface image in the main frame buffer (61) after the interaction when a main touch screen icon (74) of the user interface (70) is selected on the main touch screen (42).

5. The system (2) of claim 4, further **characterized in that** the controller (43) maintains the user interface image in the secondary frame buffer (62) and directs the secondary touch screen (53) to the main frame buffer (61) for the secondary touch screen (53) to receive the user interface image in the main frame buffer (61) having the main touch screen (42) and the secondary touch screen (53) simultaneously display a same image to initiate interaction between the main touch screen (42) and the secondary touch screen (53) when the main touch screen icon (74) of the user interface (70) is selected on the secondary touch screen (53).

6. The system (2) of claim 5, further **characterized in that** the controller (43) maintains the user interface image in the main frame buffer (61) and directs the secondary touch screen (53) to the secondary frame buffer (62) for the secondary touch screen (53) to receive the user interface image in the secondary frame buffer (62) and display the user interface image in the secondary frame buffer (62) when the secondary touch screen icon (75) is selected on the secondary touch screen (75) after the interaction.

7. The system (2) of any of claims 1 to 6, further **characterized in that** the memory (44) of the main device (40) is further configured to form a frequently executed icon frame buffer (83) for storing a user interface image when the controller (43) is performing a function of a frequently executed icon (76).

8. The system (2) of claim 7, further **characterized in that** the controller (43) in coordination with the memory (44) is configured to perform a function corresponding to the frequently executed icon (76) selected and update the user interface image stored in the frequently executed icon frame buffer (83) at a same time when the frequently executed icon (76) is selected.

9. The system (2) of claim 8, further **characterized in that** selecting the frequently executed icon in the main touch screen (42)/the secondary touch screen (53) directs the main touch screen (42)/the secondary touch screen (53) to the frequently executed icon frame buffer (83) having the main touch screen (42)/the secondary touch screen (53) directly receive the user interface image in the frequently executed icon frame buffer (83) and immediately display the user interface image in the frequently executed icon frame buffer (83).

10. The system (2) of claim 9, further **characterized in that**, the controller (43) continues to execute the function corresponding to the frequently executed icon (76) in a background and continues to update the user interface image in the frequently executed icon frame buffer (83) until the main device (40) is turned off when the main touch screen (42)/the secondary touch screen (53) exits the frequently executed icon frame buffer (83).

11. The system (2) of any of claims 1 to 10, further **characterized in that** the main device (40) further comprises a digital video disc (DVD) unit (45) configured to play video signals and a receiver unit (46) configured to receive an internet signal, a television signal, and a radio signal.

12. A method of operating a system for interacting screens in a car (2) **characterized by**:
turning on a power supply of the main device (40) and/or the secondary device (50) to turn on a main touch screen (42) of the main device (40) and/or a secondary touch screen (53) of the secondary device (50);
when the power supply of the main device (40) is turned on, transmitting a user interface image stored in a main frame buffer (61) of a memory (44) to the main touch screen (42) to provide a plurality of icons (71) for selection;
when the power supply of the secondary device (50) is turned on, transmitting a user interface image stored in a secondary frame buffer (83) of the memory (44) to the secondary touch screen (53) to provide a plurality of icons (71) for selection;
directing the main touch screen (42) to a frame buffer (61, 62, 83) of the memory (44) corresponding to a touch screen icon (74, 75) when the touch screen icon (74, 75) of the plurality of icons (71) is selected on the main touch screen (42);
directing the secondary touch screen (53) to a frame buffer (61, 62, 83) of the memory (44) corresponding to a touch screen icon (74, 75) when the touch screen icon (74, 75) of the plurality of icons (71) is selected on the secondary touch screen (53);
receiving of a user interface image by the main touch screen (42) from the frame buffer (61, 62, 83) corresponding to the touch screen icon (74, 75) selected on the main touch screen (42);
receiving of a user interface image by the secondary touch screen (53) from the frame buffer (61, 62, 83) corresponding to the touch screen icon (74, 75) selected on the secondary touch screen (53);and
operating and controlling the user interface image displayed on the main device (40) and/or the secondary device (50).

13. The method of claim 12, further **characterized by** maintaining the user interface image in the corresponding frame buffer (61, 62, 83) of the main device (40) and/or the secondary device (50) before directing the main device (40) and/or the secondary device (50) to the frame buffer (61, 62, 83) corresponding to the touch screen icon (74, 75) selected respectively in the main device (40) and/or the secondary device (50).

14. The method of any of claims 12 to 13, further **characterized in that** directing the main device (40) and/or the secondary device (50) to a frequently executed icon frame buffer (83) corresponding to the frequently executed icon (76) selected by having the main device (40) and/or the secondary device (50) directly receive a user interface image in the frequently executed icon frame buffer (83) and operating and controlling the user interface image displayed on the main device (40) and/or the secondary device (50) when a frequently executed icon (76) of the plurality of icons (71) is selected in the main device (40) and/or the secondary device (50).

15. The method of claim 14, further **characterized in that** performing a function corresponding to the icon (71) selected by having the main device (40) and/or the secondary device (50) receive the user interface image in the corresponding frame buffer (61, 62, 83), and operating and controlling the image displayed on the main device (40) and/or the secondary device (50) when the icon (71) selected is not the frequently executed icon (76) or the touch screen icon (74, 75).
